# EUROPÄISCHE PATENTSCHRIFT

(11) **EP 0 947 756 B1**
(45) Veröffentlichungstag und Bekanntmachung des Hinweises auf die Patenterteilung: **20.04.2005**
(21) Anmeldenummer: 99106029.4
(22) Anmeldetag: 25.03.1999
(51) Int. Cl.: F16L 9/12, F16L 9/14, F16L 9/10

(54) **Fluidführendes Bauelement für ein Sanitär- und/oder Heizungsinstallationssystem, insbesondere Sanitär- und/oder Heizungsrohr**
Modular fluid element for a sanitary and/or heating installation, in particular a sanitary and/or heating pipe
Elément modulaire pour fluide d'un système sanitaire et/ou installation de chauffage,notamment un tuyau pour installations sanitaires ou de chauffage

(30) Priorität: 03.04.1998 DE 29806127 U
(43) Veröffentlichungstag der Anmeldung: 06.10.1999
(73) Patentinhaber: Uponor Innovation AB, 513 81 Fristad (SE)
(72) Erfinder: Riesselmann, Franz-Josef, D-49393 Lohne (DE)
(74) Vertreter: Hilleringmann, Jochen, Dipl.-Ing.

(56) Entgegenhaltungen:
- WO-A-93/19927
- GB-A- 1 167 137
- US-A- 3 457 095

## Beschreibung

Die Erfindung betrifft ein fluidführendes Bauelement für ein Sanitär- und/oder Heizungsinstallationssystem, insbesondere Sanitär- und/oder Heizungsrohr.

In der Gebäudeinstallationstechnik (Sanitär- und Heizungsinstallation) werden für bestimmte Bereiche, wie beispielsweise Steigleitungen, Metallrohre Kunststoff-Verbundrohren vorgezogen. Die Ursache hierfür ist insbesondere in der relativ großen Längenausdehnung von (reinen) Kunststoffrohren zu sehen, die im späteren Einsatz zu Problemen führen kann (Lösen der Verbinder, Auftreten hoher Biegekräfte an den Abgängen und Verwerfungen der Rohre). Ein weiterer Grund, warum insbesondere bei Steigleitungen Metallrohre Kunststoff-Verbundrohren vorgezogen werden, besteht darin, dass die Verbinder für große Kunststoffrohrdimensionen, wie sie bei Steigleitungen anzutreffen sind, im Verhältnis zum Rohr relativ teuer sind. Derartige Verbinder müssen nämlich konstruktiv sehr aufwendig ausgestaltet sein, da sie die hohen Kräfte durch das Ausdehnen der Rohre auffangen müssen. Ein Nachteil von Metallrohren ist die mehr oder weniger starke Korrosion, infolge derer die Lebensdauer von Metallrohren beschränkt ist.

US-A-3,457,095 beschreibt ein Glasrohr, das mit einem Epoxidharzbeschichtungssystem versehen ist, um die Bruchgefahr zu reduzieren. Weiterhin soll das Rohr nach der Beschichtung noch eine Transparenz aufweisen. Bei der ersten Lage dieses Systems handelt es sich um ungesättigte Epoxidharze mit dem dazugehörigen Katalysator, die mit kurz geschnittenen Glasfasern vermischt und dann mittels einer speziellen Vorrichtung auf das sich drehende Glasrohr aufgetragen werden. Die Glasfasern können auch nach dem Auftragen der ersten Schicht auf die noch pastöse Masse gebracht werden, müssen dann noch in die Schicht "gerollt" werden, um die Verbindung zu dem Epoxidharz herzustellen. Es können verschiedene Harzsysteme zum Einsatz kommen. In einem sich anschließenden Temperprozess härtet das Harz aus. Die zweite Beschichtung besteht ebenfalls aus einem Epoxidharz, jedoch ohne eine Glasfaserverstärkung, um eine glatte Rohroberfläche zu erhalten. Zum Abschluss kann das Rohr noch mit einer dünnen Kunststoffschicht aus Polyvinylacetat versehen werden, um eine klebfreie Rohroberfläche zu garantieren.

Der Erfindung liegt die Aufgabe zugrunde, ein fluidführendes Bauelement für ein Sanitär- und/oder Heizungsinstallationssystem, insbesondere ein Sanitär- und/oder Heizungsrohr zu schaffen, das korrosionsfest ist, ohne die obigen Nachteile von Kunststoffrohren aufzuweisen.

Zur Lösung dieser Aufgabe wird mit der Erfindung ein fluidführendes Bauelement für ein Sanitär- und/ oder Heizungsinstallationssystem, insbesondere Sanitär- und/oder Heizungsrohr, gemäß Anspruch 1 vorgeschlagen; die Merkmale einzelner Ausführungsbeispiele der Erfindung sind in den Unteransprüchen angegeben.

Bei dem erfindungsgemäßen Bauelement, bei dem es sich insbesondere um ein Rohr handelt, das aber auch als T-Stück, Fittingkörper o.dgl. ausgebildet sein kann, besteht die Innenwandung, d.h. derjenige Teil, der mit dem führenden Fluid in Verbindung steht, aus Glas. Als vorteilhaft haben sich insbesondere Mischungen auf Borsilikat-Basis herausgestellt, da derartige Materialmischungen zu einer etwas flexibleren Innenwandung führen. Der Vorteil der Verwendung von Glas als Innenwandung des fluidführenden Bauelements besteht insbesondere darin, dass Glas
- keine Korrosionseigenschaften aufweist,
- gegen alle sich im Trinkwasser möglicherweise befindenden Substanzen, wie insbesondere Desinfektionsmittel (Chlor) resistent ist,
- ein preiswerter Rohstoff ist, gut recyclebar ist und insoweit unter ökologischen Gesichtspunkten Vorzüge aufweist,
- einen Längenausdehnungskoeffizienten von nahezu 0 aufweist und
- eine hohe Steifigkeit besitzt, dennoch aber um einiges leichter ist als eine entsprechende Metallwandung.

Außen um die Glasinnenwandung herum ist eine Kunststoff-Außenwandung angeordnet, die mehrlagig ausgebildet ist und aus einem Thermoplastmaterial besteht. Zwischen der Außen- und der Innenwand befindet sich eine Haftvermittlerschicht, die ebenfalls aus Kunststoff besteht, und zwar aus einem Thermoplast- oder Elastomermaterial.

Die Verwendung einer Kunststoff-Außenwandung aus einem Polyolefin hat den Vorteil, dass
- die Außenwandung mittels Kleber oder Haftvermittler mit der Glas-Innenwandung verbunden werden kann,
- das Kunststoffmaterial recht preiswert und die Ummantelung einer Glas-Innenwandung relativ wirtschaftlich erfolgen kann,
- die Glas-Innenwandung durch die Ummantelung gegen mechanische Beschädigungen geschützt ist,
- eine praktikable Verbindungstechnik der Bauelemente (insbesondere Rohre) möglich ist (durch Schweißen, Klemmverbinder o.dgl.),
- das fluidführende Bauelement in einem gewissen Rahmen Biegekräfte aufnehmen kann, was dessen Montage entgegenkommt,
- ein Abtrennen eines Teils des fluidführenden Bauelements mit einem entsprechenden Schneidwerkzeug mit Diamantklinge recht einfach erfolgen kann und
- durch unterschiedliche Kunststoffschichten Bauelemente mit spezifischen Eigenschaften hergestellt werden können.

Erfindungsgemäß ist die Außenwandung zumindest in ihrem an die Haftvermittlerschicht angrenzenden Innenbereich und/oder die Haftvermittlerschicht selbst zur Dämpfung von von außen auf die Außenwandung einwirkenden mechanischen Belastungen weich ausgebildet ist. Hierdurch ist es möglich, dass impulsartige Belastungen, wie sie bei der Installation des erfindungsgemäßen Bauelements auftreten können, gedämpft werden und somit die Gefahr der Zerstörung der Glas-Innenwandung reduziert ist.

Eine durch und durch weich ausgebildete Außenwandung jedoch hat andererseits den Nachteil, dass die Verbindung mittels Klemmverbindern o.dgl. problematisch ist. Diesbezüglich wäre es wünschenswert, wenn die Außenwandung eine höhere Stabilität gegenüber radial wirkenden Kräften, wie sie beispielsweise bei Pressverbindern auftreten, aufweist. Demzufolge ist erfindungsgemäß die Außenwandung zumindest in ihrem Außenbereich hart ausgebildet.

Erfindungsgemäß ist die Außenwandung also aus einer weichen Innenschicht und einer demgegenüber härteren Außenschicht versehen. Für die weiche Innenschicht wird ein geschäumtes Thermoplastmaterial, insbesondere ein Polyethylen (PE), verwendet. Durch das Schäumen entsteht eine elastische Innenschicht innerhalb der Außenwandung, die von außen einwirkende impulsartige Belastungen dämpft und nicht bzw. stark vermindert bis zur Glas-Innenwandung überträgt.

Die Außenschicht der Außenwandung besteht aus einem harten Polyolefin (Thermoplastmaterial). Insbesondere weist die Außenschicht ein verdichtetes Polyethylen (HDPE) auf.

Zur weiteren Versteifung und Stabilitätserhöhung der Außenschicht der Außenwandung ist diese vorzugsweise faserverstärkt, wobei insbesondere Glasfasern eingesetzt werden.

Nachfolgend wird anhand der Figuren ein Ausführungsbeispiel der Erfindung in Form eines mehrschichtigen Steigrohres näher erläutert. Im einzelnen zeigen:
- Fig. 1: einen Abschnitt eines Steigrohres für die Gebäudeinstallation und
- Fig. 2: einen teilweisen Längsschnitt durch das Steigrohr gemäß Fig. 1 in vergrößertem Maßstab.

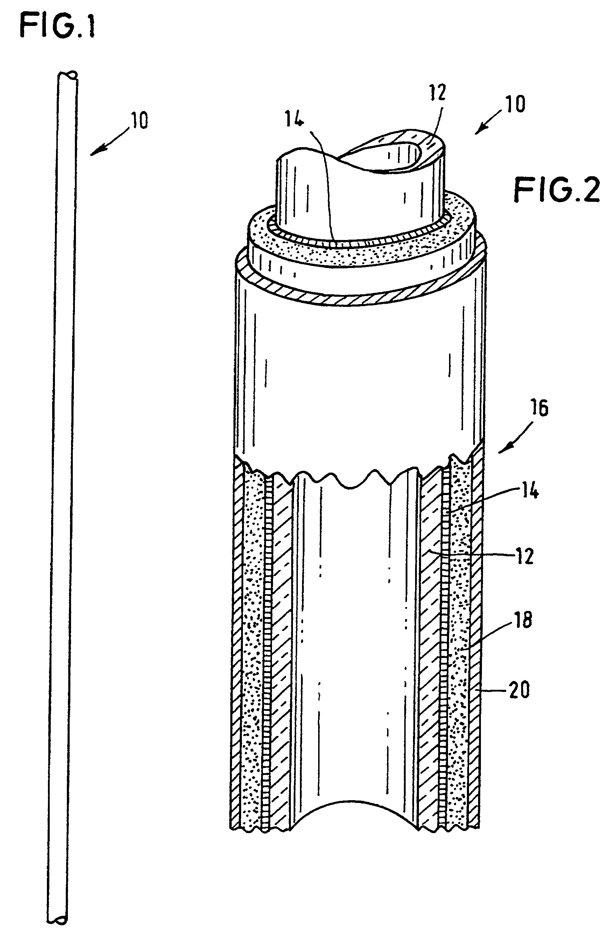

Das Steigrohr 10 gemäß den Fign. 1 und 2 weist ein Innenrohr 12 aus einem an sich üblichen Glasrohstoff auf. Als Rohstoff wird vorzugsweise eine Mischung aus Borsilikat verwendet, da dieses Material etwas flexibler ist als andere Glasrohstoffe.

Außen um das Rohr 12 herum befindet sich eine Haftvermittlerschicht 14, bei der es sich um ein Thermoplast oder Elastomer handelt. Vorzugsweise wird ein Material auf Butylen-Basis eingesetzt.

Außen um die Haftvermittlerschicht 14 herum ist ein zweischichtiges Außenrohr 16 angeordnet, das aus einem Thermoplast besteht. Dieses Außenrohr 16 weist eine weiche Innenschicht 18 und eine harte Außenschicht 20 auf. Die weiche Innenschicht 18 besteht aus weichem, geschäumtem Kunststoffmaterial, wie beispielsweise TPE, PE (vernetzt oder unvernetzt, modifiziert oder nicht modifiziert). Diese als Dämmschicht wirkende Innenschicht 18 ist außen von der Außenschicht 20 ummantelt, die aus einem härteren Kunststoffmaterial, insbesondere vernetztes HDPE besteht. Die harte Außenschicht 20 hat den Vorteil, dass sich das Rohr 10 an übliche Verbinder sicher und problemlos anschließen lässt. Andere Polyolefine sind als Material für die harte Außenschicht ebenfalls denkbar, sofern diese Materialien mit den entsprechenden Raumgewichten versehen sind.

Wie bereits oben erwähnt, fungiert die Innenschicht 18 als Dämmschicht, die die Übertragung von radial einwärts wirkenden Impulskräften von der Außenschicht 20 zum Glasrohr 12 verringert bzw. gänzlich unterbindet.

## Patentansprüche

1. Fluidführendes Bauelement für ein Sanitär- und/oder Heizungsinstallationssystem, insbesondere Sanitär- und/oder Heizungsrohr, mit
- einer Innenwandung (12) aus Glas,
- einer auf die Innenwandung (12) außen aufgebrachten Haftvermittlerschicht (14) aus einem Thermoplast- oder Elastomermaterial und
- einer mehrlagigen Außenwandung (16) aus einem Thermoplastmaterial,
- wobei die Außenwandung (16) an ihrer an die Haftvermittlerschicht angrenzenden Innenschicht (18) zur Dämpfung von von außen auf die Außenwandung (16) einwirkenden mechanischen Kräften ein geschäumtes Thermoplastmaterial und zur Verbesserung der Stabilität bei radial wirkenden Kräften eine Außenschicht (20) aus einem hochverdichteten Polyolefin-Material, insbesondere Polyethylen, aufweist.

2. Fluidführendes Bauelement nach Anspruch 1, **dadurch gekennzeichnet, dass** die Innenwandung (12) Borsilikat aufweist.

3. Fluidführendes Bauelement nach Anspruch 1 oder 2, **dadurch gekennzeichnet, dass** die Haftvermittlerschicht (14) ein Material auf Butylen-Basis aufweist.

4. Fluidführendes Bauelement nach einem der Ansprüche 1 bis 3, **dadurch gekennzeichnet, dass** die Innenschicht (18) vernetztes oder unvernetztes, modifiziertes oder nicht modifiziertes Polyolefin-Material, insbesondere Polyethylen aufweist.

5. Fluidführendes Bauelement nach einem der Ansprüche 1 bis 4, **dadurch gekennzeichnet, dass** die Außenschicht (20) faserverstärkt, insbesondere glasfaserverstärkt, ist.

## Claims

1. Fluid-carrying component for a sanitary and/or heating installation system, in particular a sanitary and/or heating pipe, comprising
- an inner wall (12) made of glass,
- an adhesive layer (14) applied to the outside of the inner wall (12), said adhesive layer being made of a thermoplastic or elastomeric material, and
- a multi-layer outer wall (16) made of a thermoplastic material,
- wherein the outer wall (16) comprises at its inner layer (18) located adjacent to the adhesive layer a foamed thermoplastic material for damping mechanical forces acting from outside on the outer wall (16), and an outer layer (20) made of a high-density polyolefin material, in particular polyethylene, for improving the stability against radially acting forces.

2. Fluid-carrying component according to claim 1, **characterized in that** the inner wall (12) comprises borosilicate.

3. Fluid-carrying component according to claim 1 or 2, **characterized in that** the adhesive layer (14) comprises a material on butylene basis.

4. Fluid-carrying component according to one of claims 1 to 3, **characterized in that** the inner layer (18) comprises a crosslinked or uncrosslinked modified or unmodified polyolefin material, in particular polyethylene.

5. Fluid-carrying component according to one of claims 1 to 4, **characterized in that** the outer layer (20) is fiber-reinforced, in particular glass fiber-reinforced.

## Revendications

1. Elément de construction conducteur de fluide pour un système d'installation sanitaire et/ou de chauffage, notamment tube sanitaire et/ou de chauffage, comprenant
- une paroi intérieure (12) en verre,
- une couche d'agent adhésif (14) en matériau thermoplastique ou élastomère, appliquée à l'extérieur de la paroi intérieure (12), et
- une paroi extérieure (16) multicouche en matériau thermoplastique,
- dans lequel la paroi extérieure (16), du côté de sa couche intérieure (18) adjacent à la couche d'agent adhésif, comporte, pour amortir les forces mécaniques agissant de l'extérieur sur la paroi extérieure (16), un matériau thermoplastique expansé et, pour améliorer la stabilité en présence de forces agissant radialement, une couche extérieure (20) en matériau de polyoléfine haute densité, notamment en polyéthylène.

2. Elément de construction conducteur de fluide selon la revendication 1, **caractérisé en ce que** la paroi intérieure (12) est du silicate de bore.

3. Elément de construction conducteur de fluide selon la revendication 1 ou 2, **caractérisé en ce que** la couche d'agent adhésif (14) est un matériau à base de butylène.

4. Elément de construction conducteur de fluide selon l'une quelconque des revendications 1 à 3, **caractérisé en ce que** la couche intérieure (18) est un matériau de polyoléfine réticulé ou non réticulé, modifié ou non modifié, notamment du polyéthylène.

5. Elément de construction conducteur de fluide selon l'une quelconque des revendications 1 à 4, **caractérisé en ce que** la couche extérieure (20) est renforcée par des fibres, notamment renforcée par des fibres de verre.
